# FASCICULE DE BREVET EUROPEEN

(11) **EP 4 076 975 B1**
(45) Date de publication et mention de la délivrance du brevet: **03.07.2024**
(21) Numéro de dépôt: 20842003.4
(22) Date de dépôt: 08.12.2020
(51) Int. Cl.: B60B 30/10, B60C 25/05, B60C 25/132, B60C 23/04

(54) **PROCEDE DE SUIVI DE PNEUMATIQUES DE PLUS DE 30 POUCES PAR DES MOYENS VIDEOS**
VERFAHREN ZUR ÜBERWACHUNG VON REIFEN VON MEHR ALS 30 ZOLL ÜBER VIDEO
METHOD FOR MONITORING TYRES OF MORE THAN 30 INCHES VIA VIDEO MEANS

(30) Priorité: 20.12.2019 FR 1915280
(43) Date de publication de la demande: 26.10.2022
(73) Titulaire: COMPAGNIE GENERALE DES ETABLISSEMENTS MICHELIN, 63000 Clermont-Ferrand (FR)
(72) Inventeur: LHOSPITALIER, Denis, 63040 CLERMONT-FERRAND CEDEX 9 (FR); MARQUES, Frédéric, 63040 CLERMONT-FERRAND CEDEX 9 (FR)
(74) Mandataire: M.F.P. Michelin
(86) Numéro de dépôt international: PCT/FR2020/052331
(87) Numéro de publication internationale: WO 2021/123562

(56) Documents cités:
- WO-A1-2019/049807
- FR-A1- 2 963 453
- US-A1- 2016 152 102

## Description

La présente invention concerne le domaine de la gestion d'une flotte de véhicules, notamment des pneumatiques de ces véhicules. Elle s'applique, sans toutefois s'y restreindre, plus particulièrement au domaine des véhicules de type génie civil.

Par exemple, de tels véhicules sont utilisés dans des mines à ciel ouvert pour transporter des matériaux extraits de carrières avec des chargements qui peuvent atteindre une masse de plus de 350 tonnes. Les pneumatiques doivent être dimensionnés en conséquence avec un diamètre hors tout pouvant mesurer plus de 4 mètres et peuvent peser 5 tonnes chacun.

A titre d'illustration, un tel pneumatique a une désignation normalisée suivant l'ETRTO (European Technical Rim and Tyre Organisation) du type 59/80 R 63, avec une pression de gonflage à 650 kPa. Pour un tel pneumatique, la largeur nominale de la bande de roulement est de 59 pouces, la hauteur des flancs du pneumatiques est de 80% de sa largeur nominale, et ce pneumatique est destiné à être monté sur une roue de diamètre 63 pouces. On retrouve aussi d'autres dimensions de 49 à 57 pouces de diamètre sur ces véhicules.

L'encombrement et la masse de ces pneumatiques sont tels qu'il est nécessaire d'avoir des engins de manutention dédiés pour procéder aux opérations de montage et démontage, soit pour changer un pneumatique, soit pour les permuter d'un essieux à un autre.

Les véhicules de transport dans les mines existent suivant des configurations de deux à quatre essieux avec des montes simples ou jumelées en fonction de leur destination d'usage. On inclut dans les véhicules de transport les chargeuses munies de godets utilisés pour le chargement des bennes.

L'exploitation minière consiste à extraire des minerais, c'est-à-dire des roches de la croûte terrestre contenant des minéraux ou des métaux utiles, en proportion suffisamment intéressante pour justifier leur exploitation.

L'étape de transport dans un exploitation minière est essentielle pour sa rentabilité économique. Les véhicules (Dumper ou tombereau) sont généralement actifs sans arrêt de manière à obtenir une productivité maximale en déplaçant le plus gros volume de gravats pour être traités par des procédés de minéralurgie.

La gestion des pneumatiques de la flotte des véhicules consiste à surveiller la pression de gonflage, la température, et l'usure dans un approche de maintenance prédictive de manière à anticiper les dysfonctionnements liés aux pneumatiques, et donc à éviter l'arrêt du véhicule pour maximiser sa durée d'usage.

L'usure des pneumatiques est une autre performance en lien avec la maîtrise de la pression de gonflage. A titre d'exemple, une pression trop basse de 20% écourte la durée de vie du pneumatique d'environ 27%. Inversément, dans le cas d'une surpression de 20%, la durée de vie diminue d'environ 12%.

Dans les documents FR2963453, et WO2019049807A1, il est présenté des systèmes de gestion des pneumatiques d'une flotte de véhicules d'exploitation minière. Le document US2016/152102A1 divulgue une méthode de changement des pneumatiques utilisant des robots.

Ainsi les attentes du client exploiteur des mines sont la sécurité des personnes et du matériel par une utilisation maîtrisée des pneumatiques, la productivité qui ne doit pas être affectée par des défaillances du produit, et enfin la durée d'utilisation des pneumatiques qui doit être la plus longue possible.

Afin de gérer la flotte de véhicules, un opérateur enregistre manuellement quel véhicule comprend quel pneumatique et dans quelle position. Ainsi, lors d'un changement de pneumatique, l'opérateur doit remplacer également manuellement l'identifiant du pneumatique à remplacer par l'identifiant du pneumatique de remplacement ainsi qu'un identifiant de la position du véhicule où le remplacement à été effectué. En outre, il enregistre l'identifiant du véhicule sur lequel le pneumatique a été changé.

L'opérateur écrit sur papier ces changements observés sur le véhicule. Puis, le gestionnaire de la base de données met à jour manuellement une base de données en y reportant les différents identifiants. De plus si le véhicule dispose d'un système de surveillance des pneumatiques, par exemple de la pression des pneumatiques, il lui faut également mettre à jour aussi les données dans ce système.

L'objectif de l'invention est de proposer un procédé qui permet de faciliter la gestion des pneumatiques des véhicules de transports dans les mines, lors des opérations de montage et de démontage des pneumatiques.

La solution proposée par l'invention consiste en un procédé pour le suivi des pneumatiques des véhicules de transport des excavations dans les mines, utilisant un engin de manutention des pneumatiques, lesdits pneumatiques étant équipés d'étiquette d'identification par radio fréquence et de capteurs de paramètres physiques, ledit procédé utilisant également une base de données comprenant les identifiants des véhicules, les identifiants des pneumatiques, les identifiants des capteurs, et des positions aux essieux des pneumatiques, et ledit procédé incluant les étapes suivantes :
a. L'engin de manutention reçoit une instruction contenant une position d'un pneumatique à remplacer sur un véhicule de transport ;
b. l'engin de manutention identifie le véhicule de transport par un système d'acquisition et de traitement vidéo, ledit véhicule étant muni d'un identifiant visuel détectable;
c. l'engin de manutention active la détection du pneumatique à remplacer sur le véhicule par des moyens de radio fréquence ;
d. l'engin de manutention active la détection de l'essieu et la position du pneumatique à l'essieu du véhicule par un système d'acquisition et de traitement vidéo;
e. l'engin de manutention effectue le remplacement du pneumatique à remplacer par un pneumatique de remplacement ;
f. la base de données est mise à jour avec les identifiants du véhicule et du pneumatique de remplacement, et sa position à l'essieu.

L'invention propose d'utiliser un procédé basé sur un système de vision industrielle couplée à une base de données pour gérer le suivi des pneumatiques des véhicules de transport des excavations dans les mines.

La vision industrielle consiste à automatiser les tâches de contrôle et de suivi des informations relatives aux pneumatiques par l'implémentation d'un procédé capable d'analyser, de traiter, et de comprendre une ou plusieurs images prises par un système d'acquisition vidéo.

Par exemple, lors du changement de pneumatiques d'un véhicule de transport suite à une crevaison ou suite à toute autre détérioration, le pneumatique hors d'usage doit être remplacé par un pneumatique neuf ou un pneumatique déjà utilisé mais avec un potentiel de roulage résiduel. Le procédé doit permettre de tracer le flux d'informations associées en terme d'identification du véhicule et de l'essieu concerné, d'identification de la position à l'essieu ainsi que les paramètres physiques des niveaux de pression et de température des pneumatiques impliqués.

La permutation des pneumatiques de l'essieu avant vers l'essieu arrière est un autre exemple qui donne lieu à des opérations de montage et de démontage des pneumatiques des véhicules de transport.

Le suivi des pneumatiques concerne non seulement la traçabilité des pneumatiques, mais aussi la surveillance de paramètres physiques du pneumatique tels que par exemple la pression de gonflage, et/ou la température.

Dans tous les cas, la gestion du suivi des pneumatiques consiste à connaître de façon fiable, en tout instant leur localisation, et celle des capteurs de mesure des paramètres physiques associés.

Pour cela, chaque pneumatique est équipé d'une étiquette d'identification par radio fréquence (RFID), et d'un capteur de mesure de paramètres physiques, lui aussi avec un identifiant unique. Ces dispositifs sont accrochés à l'intérieur du pneumatique.

Les étiquettes RFID des pneumatiques sont préférablement passives, fonctionnant en lecture seule. Elles sont composées d'une antenne conçue pour fonctionner dans une bande de fréquence donnée, connectée à une puce électronique, qui stocke les données. La capacité d'information de l'étiquette RFID est typiquement de 2 kB, mais la plupart ne contiennent qu'un numéro d'identification de 96 ou 128 bits. Un signal électromagnétique lui est alors envoyé, ce qui permet d'activer la puce RFID et de lire les informations qu'elle contient.

Le lecteur envoie un signal d'interrogation particulier auquel répond l'étiquette. L'une des réponses les plus simples possibles est le renvoi d'une identification numérique, par exemple celle du standard EPC-96 qui utilise 96 bits.

L'invention prévoit également un procédé qui est mis en oeuvre suivant un dispositif (D) comprenant un système d'acquisition et de traitement vidéo doté d'au moins une caméra avec optionnellement un éclairage adapté pour identifier les véhicules qui sont munis d'un identifiant visuel détectable par le système d'acquisition et de traitement d'images ; des moyens de lecture destinés à lire les étiquettes d'identification des capteurs et des pneumatiques ; des moyens de calculs et de traitement d'images pour détecter les essieux et la position des pneumatiques sur les essieux du véhicule ; et une base de données qui associe les identifiants des pneumatiques et du véhicule sur lequel ils sont montés, ainsi que les positions aux essieux.

Le dispositif de vision industrielle est installée sur l'engin de manutention. En particulier, à l'avant de l'engin de manutention entre les fourches de préhension des pneumatiques, la caméra est fixée de manière à pouvoir filmer dans le sens du mouvement dans l'espace délimité par le diamètre de la jante.

Le système de vision industrielle s'appuyé sur des applications de traitement d'images. Les objectifs de ces applications peuvent être de différentes natures :
- détecter la présence d'un objet ou son absence. Par exemple, pour identifier le véhicule, l'engin l'identifiant visuel fixé sur le véhicule de transports des mines permettant sa détection ;
- calculer les caractéristiques d'un ou de plusieurs éléments de l'image. Par exemple, sur une suite d'images ou une séquence, on détermine ou non la présence du pneumatique entre les fourches de l'engin de manutention pour déterminer l'action de l'engin de manutention ;
- dans tous les cas, l'idée est, en partant d'une image initiale, d'en extraire des informations. Pour cela, on va utiliser les opérateurs à la manière de « briques logicielles », en les combinant et en les enchaînant. Ces techniques sont la base des systèmes de vision industrielle.

Dans le contexte de la vision industrielle, le traitement d'images se place après les étapes d'acquisition et de numérisation, assurant les transformations d'images et la partie de calcul permettant d'aller vers une interprétation des images traitées.

La compréhension du traitement d'images commence par la compréhension de ce qu'est une image. Le mode et les conditions d'acquisition et de numérisation des images traitées conditionnent largement les opérations qu'il faudra réaliser pour extraire de l'information. En effet, de nombreux paramètres entrent en compte, les principaux étant :
- la résolution d'acquisition et le mode de codage utilisé lors de la numérisation, qui déterminent le degré de précision des éventuelles mesures de dimensions ;
- les réglages optiques utilisés, (dont la mise au point et la profondeur de champ) qui déterminent par exemple la netteté de l'image ;
- les conditions d'éclairage, qui déterminent une partie de la variabilité des images traitées ;
- le bruit de la chaîne de transmission d'image ;
- l'angle de vision.

Quelques exemples types d'informations qu'il est possible d'obtenir d'une image numérique : la luminance moyenne, le contraste moyen, la couleur prédominante, le taux d'acuité moyen (précis ou flou), le taux d'uniformité des couleurs, la présence ou l'absence de certains objets.

La mise en oeuvre du procédé de l'invention se produit quand, il s'agit par exemple de changer un pneumatique du véhicule de transport de la mine. L'engin de manutention se dirige vers le véhicule de transport de la mine avec la caméra activée. Le conducteur de l'engin de manutention connaît grâce au poste de suivi en centrale la position du pneumatique à déplacer sur le véhicule qui définit la zone de travail sans connaître précisément les identifiants du pneumatique et du capteur.

La détection du véhicule de transport se fait par la recherche et la lecture du numéro d'identification affiché sur la benne ou sur l'avant du véhicule. Une autre possibilité serait d'utiliser la signature visuelle du véhicule qui est en réalité un « Dumper » ou encore un tombereau. Dès lors la reconnaissance du véhicule consiste à identifier la signature visuelle dans les images produites par la caméra à l'aide d'un logiciel de traitement d'images.

La base de données centrales contient les données sur le véhicule comme le nombre d'essieux, le type de montage simple ou jumelé pour chaque essieu. A partir de l'identifiant du véhicule, on peut opérer une requête sur la base de données centrales pour lire les données relatives au véhicule.

La détection des identifiants des pneumatiques et de leur capteur se fait en activant depuis l'engin de manutention la lecture des étiquettes RFID des pneumatiques et/ou des capteurs. Le recoupement des informations lues de la base de données avec celles du lecteur RFID permettent d'identifier précisément le pneumatique à remplacer.

L'étape suivante consiste à mettre à jour la base de données avec les identifiants du pneumatique de remplacement, de son capteur, et de l'identifiant véhicule.

Le nombre de véhicules de transport dépend de la taille de la mine, mais en général, il faut compter un ou deux engins de manutention (Tyre Handler) pour plusieurs dizaines de véhicules de transports.

L'organisation de l'exploitation comprend des zones de stockages des pneumatiques neufs, usés, et de remplacements, et une zone de travail pour le changement ou la permutation des pneumatiques.

L'engin de manutention se déplace entre les zones de stockages et la zone de travail où se trouve les véhicules de transport.

Selon une première variante, le procédé comprend une étape dans laquelle l'engin de manutention active la détection d'une zone de stockage des pneumatiques usés par un système d'acquisition et de traitement vidéo.

Selon une deuxième variante, le procédé comprend une étape dans laquelle l'engin de manutention dépose le pneumatique usé dans la zone de stockage des pneus usés .

Selon une troisième variante, le procédé comprend une étape dans laquelle l'engin de manutention active la détection de la zone de stockage des pneumatiques de remplacements par un système d'acquisition et de traitement vidéo.

Dans une variante de l'invention, les moyens d'acquisition vidéo comprennent une caméra de vision en trois dimensions (3D).

La caméra fonctionnant sur le principe du temps de vol permet de mesurer en temps réel une scène en 3 dimensions (3D).

Pour ce faire, ces caméras illuminent la scène et les objets mesurés par un éclair de lumière, généralement laser, et calculent le temps que cet éclair prend pour effectuer le trajet entre l'objet et la caméra. Le temps de vol de cet éclair est directement proportionnel à la distance entre la caméra et l'objet mesuré. Cette mesure de temps de vol est effectuée indépendamment pour chaque pixel de la caméra, permettant ainsi d'obtenir une image complète en 3D de l'objet mesuré.

Alternativement à la vision 3D par temps de vol, selon une autre variante de l'invention, les moyens d'acquisition vidéo comprennent un système vidéo avec deux caméras en deux dimensions (2D).

Les moyens d'acquisition vidéo sont utilisés pour identifier le véhicule, sa position par rapport à l'engin de manutention ainsi que la position du pneumatique à remplacer à l'essieu.

Pour mettre en oeuvre l'acquisition vidéo avec deux caméras : une caméra avec une meilleure résolution et un champ réduit, pour analyser les détails, et faire les mesures de distances avec précision, une autre caméra grand angle, permettant de localiser l'engin de manutention en conservant une grande partie du camion dans l'image, même à faible distance. Cette caméra pourrait aussi être utile pour rechercher le numéro du camion, lorsqu'il est écrit sur les flancs de la benne, car ce numéro est généralement affiché très haut, ou tout à l'avant du camion.

A noter aussi, que cette caméra n'ayant pas pour but de suivre le pneu, mais celui de reconnaître la position par rapport au véhicule, ou dans une zone de stockage, son emplacement sur le tyre handler peut être très différent de l'autre caméra.

De péférence, les pneumatiques du dispositif (D) comportent un système avec une étiquette d'identification passive et un capteur accrochés à l'intérieur du pneumatique comprenant un micro lecteur communiquant avec l'étiquette.

Les transpondeurs RFID ont souvent des distances de lecture relativement courtes. Pour des pneumatiques d'engins de génie civil, pouvant atteindre un diamètre de 4 m, la distance peut souvent s'avérer insuffisante pour assurer une lecture si le transpondeur se trouve par exemple en position haute, loin du lecteur. Selon l'invention, l'utilisation d'un module électronique actif disposant lui-même de moyens de transfert de données à plus longue distance, permet de pallier cette limitation.

Avantageusement, le système de capteur et d'étiquette passive est muni d'un module électronique actif de mesure et de transfert de paramètres physiques du pneumatique, comportant :
i) au moins un capteur (par exemple de pression de température un compte-tour de préférence de type bobine, etc) ;
ii) une alimentation pour faire fonctionner le capteur ;
iii) un module de transmission de données permettant de transmettre les données physiques reçues des capteurs à un récepteur distant ;
iv) optionnellement, le capteur est capable de lire l'étiquette du pneumatique.

Ce module électronique de mesure et transfert de données de paramètres physiques de pneumatiques permet avantageusement :
- de lire l'identifiant du pneumatique : soit régulièrement, soit sur demande via un module d'interrogation, soit en relation avec un test de seuil de basse pression ou pression sensiblement nulle indiquant que le pneumatique et le capteur ont potentiellement été désassociés ;
- de stocker cet identifiant dans une mémoire locale ou distante ;
- de transmettre cet identifiant via un canal d'émission à sensiblement longue portée à un récepteur sur véhicule, à un lecteur mobile ou à une borne de lecture;
- dans le cas d'un capteur pouvant lire l'identifiant du pneumatique, d'associer les paramètres physiques de pneumatique mesurés au bon pneumatique de façon certaine, comme par exemple en associant ces paramètres (km, pression, température, etc.) à l'identifiant pneumatique du patch lié au pneumatique où les mesures ont été effectuées.

Selon une variante de l'invention, la détection des zones de stockage des pneumatiques utilise des moyens GPS.

Selon une autre variante, la détection de la position des pneumatiques aux essieux du véhicule essieu utilise des moyens GPS et une balise locale.

L'invention concerne également un engin de manutention des pneumatiques des véhicules de transport des mines. Ledit véhicule a des pneumatiques caractérisé en ce qu'il est équipé d'un dispositif selon l'invention.

Selon une variante de l'invention, l'engin de manutention (TH) des pneumatiques des véhicules de transport est caractérisé en ce qu'il comprend un écran de suivi et d'interactions avec le conducteur de l'engin de manutention (TH), des étapes du procédé selon l'invention.

L'invention sera mieux comprise à la lecture de la description qui va suivre, donnée à titre d'exemple non limitatif et faite en se référant aux dessins de 1 à 5, dans lesquels :
- Les figures 1-A, à 1-E sont une vue d'ensemble du dispositif utilisé par l'invention ;
- La figure 2 représente l'engin de manutention avec son équipement d'acquisition vidéo ;
- La figure 3 montre l'équipement d'un véhicule de transport en lien avec l'invention ;
- La figure 4-A représente un véhicule de transport, et la figure 4-B représente la signature visuelle associée pour l'algorithme de traitement d'images ;

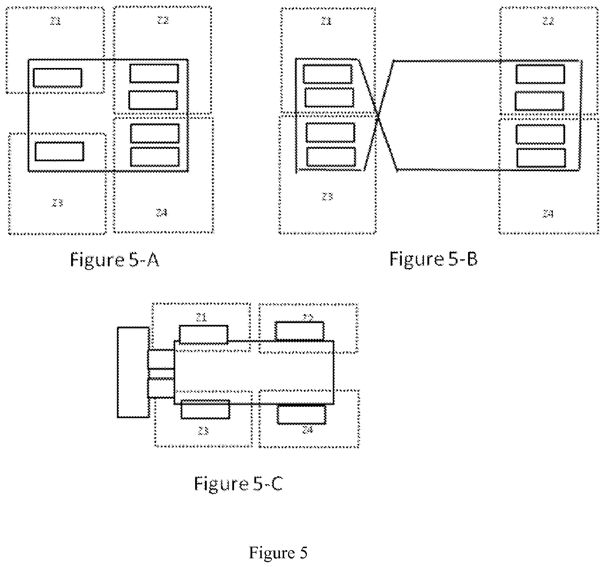

- Les figures 5-A, 5-B, 5-C qui représentent les zones de travail autour des véhicules de transport de la mine.

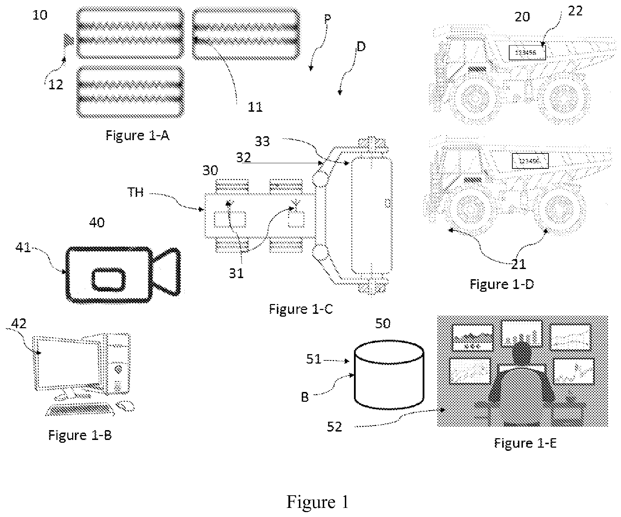

Sur les figures 1-A à 1-E, la référence générale 10 représente les stocks de pneus 11 neufs, usés, ou de remplacement. La référence 12 est un identifiant visuel de reconnaisance de la zone de stockage. La référence 20 est relative aux véhicules de transport de la mine, la référence 21 désigne les pneumatiques équipés d'étiquette RFID (Identification par radio fréquence), et de capteurs. La référence 22 désigne l'identifiant de reconnaissance visuelle du véhicule. La référence générale 40 désigne le système de vision industrielle, avec une caméra 41 dotée d'un système d'éclairage intégré, une unité de calcul 42 avec un logiciel de traitement d'images. La référence générale TH est relative à l'engin de manutention en vue du dessus qui comprend des fourches de préhension 32 pour saisir le pneumatique 33, maintenu à la verticale lors des déplacements. Enfin, la référence 50 désigne le système de surveillance, avec la base de données 51 et le poste centrale 52 avec les écrans de suivi.

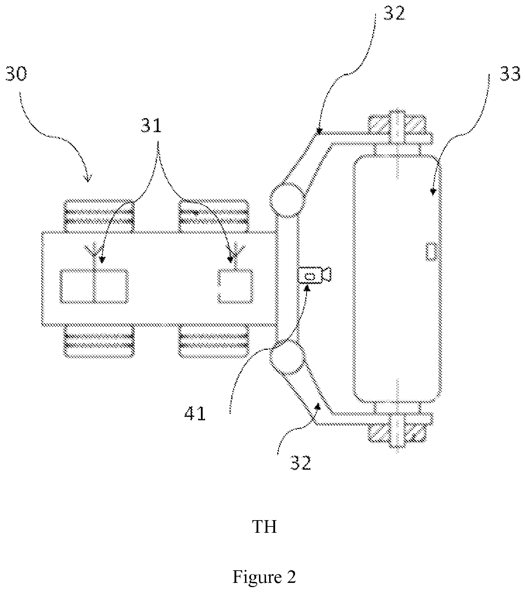

La figure 2 représente une vue de dessus d'un engin de manutention avec la caméra 41 positionnée à l'avant proche de l'axe du centre du pneumatique 33 de manière à pouvoir filmer dans la direction du mouvement. Le pneumatique 33 est saisi entre les fourches de préhension 32 de l'engin de manutention qui communique avec la base centrale via les antennes 31.

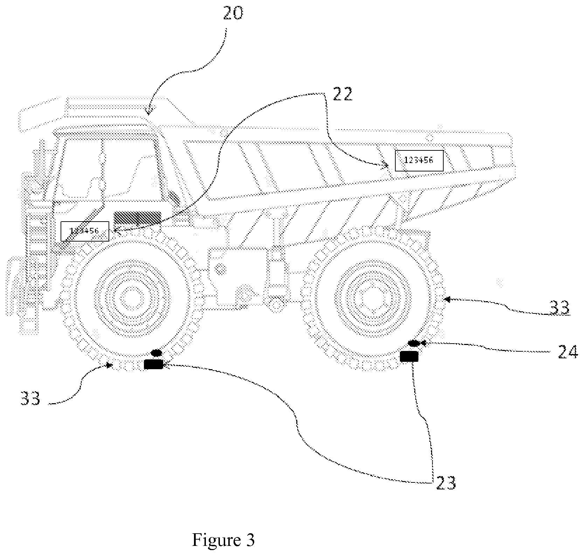

La figure 3 représente un véhicule de transport de référence générale 20 dont les pneumatiques 33 sont équipés d'identifiants RFID 24 et de capteurs 23. Le véhicule est détectable par le système de vision grâce à l'identifiant visuel 22.

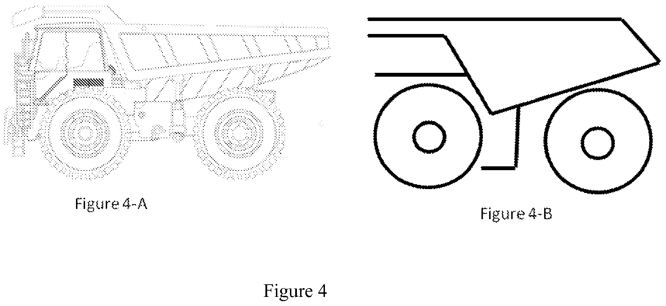

Sur la figure 4-A, on peut voir un véhicule de transport avec sa signature visuelle 4-B ou encore son image de référence qui est utilisée dans les algorithmes de traitement d'image pour reconnaître les véhicules.

Les figures respectivement 5-A, 5-B, 5-C représentent respectivement un tombereau rigide, un tombereau articulé et une chargeuse dans une vue de dessus qui sont les véhicules de la mine en lien avec l'invention. Sur ces figures, on peut également voir les zones de travail Z1, Z2, Z3, et Z4 qui sont les endroits où on réalise par exemple, les activités de montage et de démontage des pneumatiques avec l'aide de l'engin de manutention.

On va maintenant décrire un exemple de réalisation de l'invention lors du démontage d'un pneumatique sur un essieu arrière jumelé.

Le conducteur de l'engin de manutention, informé par le central connaît la zone de travail où se diriger pour remplacer le pneumatique défectueux. Par exemple, il peut s'agir du pneumatique avant droit, mais le conducteur de l'engin de manutention ne connaît ni l'identifiant du pneumatique à remplacer ni l'identifiant de son capteur. Par ailleurs dans un souci de traçabilité en plus des identifiants, l'essieu sur lequel le pneumatique est monté ainsi que la position du pneumatique sur cet essieu sont des informations à rentrer dans la base de données de suivi.

L'opération de démontage se déroule selon les étapes suivantes :
a. L'engin de manutention se positionne dans la zone de travail en avançant vers le véhicule de transport conformément aux informations reçues du central;
b. La caméra est activée pour la détection de l'essieu et de la position du pneumatique sur cet essieu de manière à alimenter la base de données ;
c. Le pneumatique à changer est démonté avec l'aide de l'engin de manutention ;
d. Le pneumatique saisi est transporté de la zone de travail vers la zone de stockage par l'engin de manutention;
e. Sur le trajet vers la zone de stockage, le conducteur de l'engin de manutention active la lecture par radio fréquence (RFID) des étiquettes du pneumatique et du capteur. Le pneumatique doit être suffisamment loin du véhicule avec les autres pneumatiques montés, et suffisamment loin de la zone de stockage pour obtenir seulement les réponses des identifiants du pneumatique transporté, et du capteur associé;
f. La caméra de l'engin de manutention est activée pour la détection de la zone de stockage où le pneumatique est déposé ;
g. La base de données de suivi est mise à jour avec les identifiants des pneumatiques, des capteurs, et de leur localisation sur l'essieu, et/ou leur position de stockage.

Les véhicules existent suivant des configurations de deux ou quatre essieux avec des montes simples ou jumelés sur les essieux milieux et arrière en fonction de leur destination d'usages. A chaque configuration du véhicule de transport, est associé une image de référence. A titre d'exemple, les figures 4-A et 4-B représentent respectivement le véhicule de transport et l'image de référence associée.

Pour la mise à jour de la base de données, l'essieu sur lequel le pneumatique à changer est monté et sa position sur cet essieu doivent être identifiés. La détection de l'essieu et de la position sur l'essieu se fait avec l'aide d'une caméra de trois dimensions (3D).

Après le démontage, le pneumatique est encore saisi par entre les fourches de l'engin de manutention et est dans la position verticale, orienté parallèlement à la direction du mouvement. La caméra est située à l'avant de l'engin de manutention proche de l'axe du pneumatique de manière à filmer dans la direction du mouvement grâce à l'espace délimitée par le diamètre de la jante. Généralement, ce diamètre est de l'ordre de 49 à 63 pouces.

La détection de l'essieu se fait pendant que l'engin de manutention s'avance vers le véhicule de transport avec la caméra 3D activée. La caméra transmet les images à l'unité de traitement qui les compare à l'image de référence pour en déduire l'essieu concerné dans la zone de travail.

Il s'agit ensuite de déterminer la position du pneumatique sur l'essieu dans le cas d'une monte jumelée. Soit le pneumatique occupe la position intérieure sur l'essieu soit elle occupe la position extérieure. Le système d'acquisition vidéo avec le traitement d'images associé est utilisé pour déterminer cette position.

Là encore par le mouvement de l'engin de manutention vers le véhicule avec la caméra 3D activée, on va déterminer la position à l'essieu. Les images du moyeu du véhicule sont transmises à l'unité de traitement en temps réel. L'unité de traitement calcule la distance entre la caméra et le moyeu. Si la distance entre la caméra et le moyeu est inférieure à la distance minimale entre la caméra et le flanc du pneumatique, alors la position du pneumatique sur l'essieu est intérieur sinon, elle est située à l'extérieure.

## Revendications

1. Procédé (P) pour le suivi des pneumatiques des véhicules de transport des excavations dans les mines (20), utilisant un engin de manutention (TH) des pneumatiques, lesdits pneumatiques (33) étant équipés d'étiquette d'identification par radio fréquence (24) et de capteurs de paramètres physiques (23); ledit procédé (P) utilisant également une base de données (B) comprenant les identifiants des véhicules (20), les identifiants des pneumatiques, les identifiants des capteurs, et des positions aux essieux des pneumatiques, et ledit procédé (P) incluant les étapes suivantes :
a. L'engin de manutention (TH) reçoit une instruction contenant une position d'un pneumatique à remplacer sur un véhicule de transport ;
b. l'engin de manutention (TH) identifie le véhicule de transport par un système d'acquisition et de traitement vidéo, ledit véhicule étant muni d'un identifiant visuel détectable;
c. l'engin de manutention (TH) active la détection du pneumatique à remplacer sur le véhicule par des moyens de radio fréquence ;
d. l'engin de manutention (TH) active la détection de l'essieu et la position du pneumatique à l'essieu du véhicule par un système d'acquisition et de traitement vidéo;
e. l'engin de manutention effectue le remplacement du pneumatique à remplacer par un pneumatique de remplacement ;
f. la base de données (B) est mise à jour avec les identifiants du véhicule et du pneumatique de remplacement, et sa position à l'essieu.

2. Procédé (P) selon la revendication 1 comprenant une étape dans laquelle l'engin de manutention (TH) active la détection d'une zone de stockage des pneumatiques usés (11) par un système d'acquisition et de traitement vidéo (40).

3. Procédé (P) selon la revendication 2 comprenant une étape dans laquelle l'engin de manutention (TH) dépose le pneumatique usé dans la zone de stockage des pneus usés (11) ;

4. Procédé (P) selon les revendications de 1 à 3, comprenant une étape dans laquelle l'engin de manutention (TH) active la détection de la zone de stockage des pneumatiques de remplacements (11) par un système d'acquisition et de traitement vidéo (40).

5. Dispositif (D) destiné à être employé lors de la mise en oeuvre du procédé selon la revendication 1 comprenant un système d'acquisition et de traitement vidéo (40) doté d'au moins une caméra (41) avec optionnellement un éclairage adapté pour identifier les véhicules (20) qui sont munis d'un identifiant visuel détectable (22) par le système d'acquisition et de traitement d'images (40) ; des moyens de lecture destinés à lire les étiquettes d'identification des capteurs (23) et des pneumatiques (33); des moyens de calculs et de traitement d'images (42) pour détecter les essieux et la position des pneumatiques sur les essieux du véhicule (20) ; et une base de données (50) qui associe les identifiants des pneumatiques (33) et du véhicule (22) sur lequel ils sont montés, ainsi que les positions aux essieux.

6. Dispositif (D) selon la revendication 5 dans lequel les moyens d'acquisition vidéo (40) comprennent une caméra 3D (41).

7. Dispositif (D) selon l'une des revendications 5 à 6, dans lequel les moyens d'acquisition vidéo (40) comprennent un système vidéo avec deux caméras 2D.

8. Dispositif (D) selon l'une des revendications 5 à 7, dans lequel les pneumatiques (21) comportent un système avec une étiquette d'identification passive (24) et un capteur (23) accrochés à l'intérieur du pneumatique comprenant un lecteur communiquant avec l'étiquette (24).

9. Dispositif (D) selon la revendication 8 dans lequel le système de capteur et d'étiquette passive est muni d'un module électronique actif de mesure et de transfert de paramètres physiques du pneumatique, comportant :
i. au moins un capteur (par exemple de pression, de température, un compte-tour, etc) ;
ii. une alimentation pour faire fonctionner le capteur;
iii. un module de transmission de données permettant de transmettre les données physiques reçues des capteurs à un récepteur distant ;
iv. optionnellement, le capteur est capable de lire l'étiquette du pneumatique.

10. Dispositif (D) selon l'une des revendications de 5 à 9 dans lequel une détection de zones de stockage (10) des pneumatiques utilise des moyens GPS.

11. Dispositif (D) selon l'une des revendications de 5 à 10 dans lequel la détection de la position des pneumatiques aux essieux du véhicule utilise des moyens GPS et une balise locale.

12. Engin de manutention (TH) des pneumatiques des véhicules de transport dans les mines, **caractérisé en ce qu'**il est équipé du dispositif de l'une des revendications 5 à 11.

13. Engin de manutention (TH) des pneumatiques des véhicules de transport dans les mines, selon la revendication 12, **caractérisé en ce qu'**il comprend un écran de suivi des étapes du procédé (52) décrit dans la revendication 1.

## Patentansprüche

1. Verfahren (P) für die Überwachung der Reifen der Transportfahrzeuge für den Aushub im Bergbau (20), bei dem ein Gerät zur Handhabung (TH) der Reifen verwendet wird, wobei die Reifen (33) mit einem Etikett zur Funkfrequenzidentifikation (24) und mit Sensoren für physikalische Parameter (23) ausgerüstet sind; wobei das Verfahren (P) ferner eine Datenbank (B) verwendet, die die Kennungen der Fahrzeuge (20), die Kennungen der Reifen, die Kennungen der Sensoren und Positionen der Reifen auf den Achsen beinhaltet, und wobei das Verfahren (P) die folgenden Schritte umfasst:
a. das Handhabungsgerät (TH) empfängt eine Anweisung, die eine Position eines auszutauschenden Reifens an einem Transportfahrzeug enthält;
b. das Handhabungsgerät (TH) identifiziert das Transportfahrzeug mit Hilfe eines Videoerfassungs- und - verarbeitungssystems, wobei das Fahrzeug mit einer detektierbaren visuellen Kennung ausgestattet ist;
c. das Handhabungsgerät (TH) aktiviert die Detektion des auszutauschenden Reifens an dem Fahrzeug mit Hilfe von Funkfrequenzmitteln;
d. das Handhabungsgerät (TH) aktiviert die Detektion der Achse und der Position des Reifens auf der Achse des Fahrzeugs mit Hilfe eines Videoerfassungs- und - verarbeitungssystems;
e. das Handhabungsgerät führt den Austausch des auszutauschenden Reifens durch einen Austauschreifen durch;
f. die Datenbank (B) wird mit den Kennungen des Fahrzeugs und des Austauschreifens und dessen Position auf der Achse aktualisiert.

2. Verfahren (P) nach Anspruch 1, das einen Schritt beinhaltet, während dessen das Handhabungsgerät (TH) die Detektion eines Lagerbereichs für die Altreifen (11) mit Hilfe eines Videoerfassungs- und -verarbeitungssystems (40) aktiviert.

3. Verfahren (P) nach Anspruch 2, das einen Schritt beinhaltet, während dessen das Handhabungsgerät (TH) den Altreifen in dem Lagerbereich für die Altreifen (11) ablegt;

4. Verfahren (P) nach den Ansprüchen 1 bis 3, das einen Schritt beinhaltet, während dessen das Handhabungsgerät (TH) die Detektion des Lagerbereichs für die Austauschreifen (11) mit Hilfe eines Videoerfassungs- und -verarbeitungssystems (40) aktiviert.

5. Vorrichtung (D), die dazu bestimmt ist, bei der Umsetzung des Verfahrens nach Anspruch 1 eingesetzt zu werden, beinhaltend ein Videoerfassungs- und - verarbeitungssystem (40), das über mindestens eine Kamera (41), optional mit Beleuchtung, verfügt, die dazu angepasst ist, die Fahrzeuge (20), die mit einer mit Hilfe des Videoerfassungs- und -verarbeitungssystems (40) detektierbaren visuellen Kennung (22) ausgestattet sind, zu identifizieren; Lesemittel, die dazu bestimmt sind, die Identifikationsetiketten der Sensoren (23) und der Reifen (33) zu lesen; Rechen- und Bildverarbeitungsmittel (42) zum Detektieren der Achsen und der Position der Reifen auf den Achsen des Fahrzeugs (20); und eine Datenbank (50), die die Kennungen der Reifen (33) und des Fahrzeugs (22), an dem sie montiert sind, sowie die Positionen auf den Achsen assoziiert.

6. Vorrichtung (D) nach Anspruch 5, wobei die Videoerfassungsmittel (40) eine 3D-Kamera (41) beinhalten.

7. Vorrichtung (D) nach einem der Ansprüche 5 bis 6, wobei die Videoerfassungsmittel (40) ein Videosystem mit zwei 2D-Kameras beinhalten.

8. Vorrichtung (D) nach einem der Ansprüche 5 bis 7, wobei die Reifen (21) ein System mit einem passiven Identifikationsetikett (24) und einem Sensor (23), die im Inneren des Reifens befestigt sind, umfassen, beinhaltend ein Lesegerät, das mit dem Etikett (24) kommuniziert.

9. Vorrichtung (D) nach Anspruch 8, wobei das System aus Sensor und passivem Etikett mit einem aktiven elektronischen Modul zum Messen und Übermitteln von physikalischen Parametern des Reifens ausgestattet ist, umfassend:
i. mindestens einen Sensor (beispielsweise einen Drucksensor, einen Temperatursensor, einen Drehzahlmesser usw.);
ii. eine Versorgung, um den Sensor zu betreiben;
iii. ein Modul zur Übertragung von Daten, das eine Übertragung der von den Sensoren empfangenen physikalischen Daten an einen entfernten Empfänger gestattet;
iv. wobei der Sensor optional dazu fähig ist, das Etikett des Reifens zu lesen.

10. Vorrichtung (D) nach einem der Ansprüche 5 bis 9, wobei eine Detektion von Lagerbereichen (10) für die Reifen GPS-Mittel verwendet.

11. Vorrichtung (D) nach einem der Ansprüche 5 bis 10, wobei die Detektion der Position der Reifen auf den Achsen des Fahrzeugs GPS-Mittel und eine lokale Bake verwendet.

12. Handhabungsgerät (TH) für die Reifen der Transportfahrzeuge im Bergbau, **dadurch gekennzeichnet, dass** es mit der Vorrichtung nach einem der Ansprüche 5 bis 11 ausgerüstet ist.

13. Handhabungsgerät (TH) für die Reifen der Transportfahrzeuge im Bergbau nach Anspruch 12, **dadurch gekennzeichnet, dass** es einen Bildschirm zur Überwachung der Schritte des in Anspruch 1 beschriebenen Verfahrens (52) beinhaltet.

## Claims

1. Method (P) for monitoring the tyres of vehicles (20) transporting excavations in mines, using tyre handling equipment (TH), said tyres (33) being equipped with radio frequency identification tags (24) and physical parameter sensors (23); said method (P) also using a database (B) containing the identifiers of the vehicles (20), the identifiers of the tyres, the identifiers of the sensors and of the positions of the tyres on the axles, and said method (P) including the following steps:
a. the handling equipment (TH) receives an instruction containing a position of a tyre to be replaced on a transport vehicle;
b. the handling equipment (TH) identifies the transport vehicle by means of a video acquisition and processing system, said vehicle being equipped with a detectable visual identifier;
c. the handling equipment (TH) activates the detection of the tyre to be replaced on the vehicle by radio frequency means;
d. the handling equipment (TH) activates the detection of the axle and the position of the tyre on the vehicle axle by means of a video acquisition and processing system;
e. the handling equipment replaces the tyre to be replaced with a replacement tyre;
f. the database (B) is updated with the identifiers of the vehicle and of the replacement tyre, and its position on the axle.

2. Method (P) according to claim 1, comprising a step in which the handling equipment (TH) activates the detection of a used tyres storage area (11) by means of a video acquisition and processing system (40).

3. Method (P) according to claim 2, comprising a step in which the handling equipment (TH) places the worn tyre in the used tyre storage area (11).

4. Method (P) according to claims 1 to 3, comprising a step in which the handling equipment (TH) activates the detection of the replacement tyre storage area by means of a video acquisition and processing system (40).

5. Device (D) for carrying out the method according to claim 1, comprising a video acquisition and processing system (40) equipped with at least one camera (41), optionally having suitable lighting to identify the vehicles (20) which are provided with a visual identifier (22) detectable by the image acquisition and processing system (40); reading means for reading the identification tags of the sensors (23) and of the tyres (33); calculation and image processing means (42) to detect the axles and the position of the tyres on the axles of the vehicle (20); and a database (50) which associates the identifiers of the tyres (33) and of the vehicle (22) on which they are fitted, as well as the positions on the axles.

6. Device (D) according to claim 5, in which the video acquisition means (40) comprise a 3D (41) .

7. Device (D) according to one of claims 5 to 6, in which the video acquisition means (40) comprise a video system with two 2D cameras.

8. Device (D) according to one of claims 5 to 7, in which the tyres (21) comprise a system having a passive identification tag (24) and a sensor (23) attached to the inside of the tyre comprising a reader communicating with the tag (24).

9. Device (D) according to claim 8, in which the sensor and passive tag system is provided with an active electronic module for measuring and transferring physical parameters of the tyre, comprising:
i. at least one sensor (e.g. pressure sensor, temperature sensor, rev counter, etc.);
ii. a power supply to operate the sensor;
iii. a data transmission module to transmit the physical data received from the sensors to a remote receiver;
iv. the sensor is optionally able to read the tyre tag.

10. Device (D) according to one of claims 5 to 9, in which a detection of tyre storage areas (10) uses GPS means.

11. Device (D) according to one of claims 5 to 10, in which the detection of the position of the tyres on the axles of the vehicle uses GPS means and a local beacon.

12. Handling equipment (TH) for the tyres of transport vehicles in mines, **characterised in that** it is equipped with the device according to one of claims 5 to 11.

13. Handling equipment (TH) for the tyres of transport vehicles in mines according to claim 12, **characterised in that** it comprises a screen (52) for monitoring the steps of the method described in claim 1.
